(19) Europäisches Patentamt
European Patent Office
Office européen des brevets

(11) EP 1 329 435 A1

(12) # EUROPÄISCHE PATENTANMELDUNG

(43) Veröffentlichungstag:
**23.07.2003 Patentblatt 2003/30**

(51) Int Cl.[7]: **C04B 24/26**, C04B 28/02

(21) Anmeldenummer: **02028229.9**

(22) Anmeldetag: **16.12.2002**

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(30) Priorität: **18.01.2002 DE 10202039**

(71) Anmelder: **BASF AKTIENGESELLSCHAFT**
**67056 Ludwigshafen (DE)**

(72) Erfinder:
- **Pakusch, Joachim, Dr.**
  **67346 Speyer (DE)**
- **Denu, Hans-jürgen**
  **67159 Friedelsheim (DE)**
- **Jahns, Ekkehard, Dr.**
  **69469 Weinheim (DE)**
- **Funk, Rüdiger, Dr.**
  **65527 Niedernhausen (DE)**
- **Hoss, Ulrike**
  **65830 Kriftel (DE)**

(54) **Mischungen aus hydrogel-formenden Polymeren und Baustoffen**

(57) Mischungen aus festen, feinteiligen, hydrogelformenden Polymeren sowie hydraulisch abbindenden Baustoffen, wobei solche festen, feinteiligen, hydrogelformenden Polymere eingesetzt werden, welche einen Anteil von Partikeln mit einer Teilchengröße von mehr als 200 μm aufweisen, der nicht mehr als 2 Gew.-% beträgt. Als feste, feinteilige, hydrogel-formende Polymere werden insbesondere solche Polymere eingesetzt, welche als vernetzte Polymere mit Säuregruppen vorliegen.

EP 1 329 435 A1

## Beschreibung

Die vorliegende Erfindung betrifft Mischungen aus festen, feinteiligen, hydrogel-formenden Polymeren sowie hydraulisch abbindenden Baustoffen, wobei solche festen, feinteiligen, hydrogel-formenden Polymere eingesetzt werden, welche einen Anteil von Partikeln mit einer Teilchengröße von mehr als 200 µm aufweisen, der nicht mehr als 2 Gew.-% beträgt.

Weiterhin betrifft die vorliegende Erfindung ein Verfahren zur Herstellung der erfindungsgemäßen Mischungen sowie die Verwendung von festen, feinteiligen, hydrogel-formenden Polymeren als Zuschlagsstoffe für hydraulisch abbindende Baustoffe.

Der Zusatz von hydrogel-formenden Polymeren, auch Superabsorber-Polymere (SAP) genannt, zu hydraulisch abbindenden Baustoffen, wie zum Beispiel Mörtel, Zement oder Gips ist bereits seit längerem bekannt. So beschreibt beispielsweise die DE-A 19539250 Mischungen aus superabsorbierenden Materialien und wasserlöslichen Polyalkylenoxiden, welche als sogenannte Abbindezusatzmittel für Zementzubereitungen eingesetzt werden. Weiterhin werden in der EP-B 530768 Baustoffe durch Mischungen aus mindestens 65 Gew.-% eines wasserlöslichen Celluloseethers mit Polyacrylamid und bis zu 20 Gew.-% eines superabsorbierenden Polymeren modifiziert.

Gegenstand der EP-A 448717 sind Zementadditive, die durch eine spezielle Vernetzung wasserlöslicher Hauptketten hergestellt werden. Diese Hauptketten weisen bevorzugt Sulfonsäure- bzw. polyethylenoxidhaltige Seitenketten auf. Derartige Zusatzmittel besitzen in erster Linie einen dispergierenden Effekt (Verflüssigung), eine Erhöhung der Druckfestigkeit wird nicht erwähnt.

Weiterhin wird in der EP-A 338739 ein Verfahren offenbart, bei dem mit Wasser vorgequollene superabsorbierende Polymere als Zuschlagsstoffe Mörtel oder Betonen zugesetzt werden, welche dann nach Abtrocknen beispielsweise definierte Hohlräume erzeugen können. Aus der JP-A 63011558 ist überdies bekannt, Beton mit einem superabsorbierenden Polymeren zu modifizieren, welches eine Wasseraufnahme von mehr als 400 g Wasser pro Gramm SAP sowie eine Teilchengröße von weniger als 50 µm aufweist.

In der Bauchemie besteht eine wichtige Aufgabe darin, hydraulisch abbindenden Baustoffen über einen genügend langen Zeitraum freies Wasser für die Hydratationsreaktion zur Verfügung zu stellen. Besonders bei Produkten, die in dünnen Schichten auf saugenden Untergründen aufgetragen werden, besteht stets die Gefahr des vorzeitigen Austrocknens und der unvollständigen Hydratation. Dies hat vor allem zu geringe Frühfestigkeiten aber auch niedrige Endfestigkeiten zur Folge. Weiterhin ist es stets wichtig, die Druckfestigkeit und die Biegezugsfestigkeit von Baustoffen durch Zusatz von geeigneten Hilfsstoffen zu verbessern.

Der vorliegenden Erfindung lag daher die Aufgabe zugrunde, verbesserte hydraulisch abbindende Baustoffe zu entwickeln, welche die geschilderten Aufgaben vorteilhaft erfüllen und sich insbesondere durch eine hohe Festigkeit auszeichnen.

Demgemäß wurden neue, verbesserte Mischungen aus festen, feinteiligen, hydrogel-formenden Polymeren sowie hydraulisch abbindenden Baustoffen entwickelt, wobei solche festen, feinteiligen, hydrogel-formenden Polymere eingesetzt werden, welche einen Anteil von Partikeln mit einer Teilchengröße von mehr als 200 µm aufweisen, der nicht mehr als 2 Gew.-% beträgt.

Weiterhin wurde ein verbessertes Verfahren zur Herstellung der erfindungsgemäßen Mischungen entwickelt. Die vorliegende Erfindung erstreckt sich ferner auch auf die Verwendung der erfindungsgemäßen Mischungen als Zuschlagsstoffe für hydraulisch abbindende Baustoffe.

Die erfindungsgemäßen Mischungen enthalten neben hydraulisch abbindenden Baustoffen u.a. feste, feinteilige, hydrogel-formende Polymere in einer solchen Menge, daß ihr Anteil, bezogen auf den hydraulisch abbindenden Baustoff, 0,01 bis 5 Gew.-%, bevorzugt 0,05 bis 2 Gew.-% und insbesondere bevorzugt 0,1 bis 1 Gew.-% beträgt.

Die dabei eingesetzten festen, feinteiligen, hydrogel-formenden Polymere weisen einen Anteil von Partikeln mit einem Teilchendurchmesser von mehr als 200 µm auf, der nicht mehr als 2 Gew.-% beträgt. Die hydrogel-formenden Polymere verfügen vorzugsweise über einen Anteil von Partikeln mit einem Teilchendurchmesser von mehr als 200 µm, der nicht mehr als 1,5 Gew.-% beträgt.

Hydrogel-formende Polymere sind insbesondere Polymere aus (co-)polymerisierten hydrophilen Monomeren, Pfropf(co-)polymere von einem oder mehreren hydrophilen Monomeren auf eine geeignete Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, Alginate und Carrageenane.

Geeignete Pfropfgrundlagen können natürlichen oder synthetischen Ursprungs sein. Beispiele sind Stärke, Cellulose oder Cellulosederivate sowie andere Polysacharide und Oligosacharide, Polyvinylalkohol, Polyalkylenoxide, insbesondere Polyethylenoxide und Polypropylenoxide, Polyamine, Polyamide sowie hydrophile Polyester. Geeignete Polyalkylenoxide haben beispielsweise die Formel

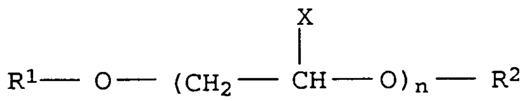

wobei

| | |
|---|---|
| $R^1$ und $R^2$ | unabhängig voneinander Wasserstoff, Alkyl, Alkenyl oder Acryl, |
| X | Wasserstoff oder Methyl und |
| n | eine ganze Zahl von 1 bis 10000 bedeuten. |

$R^1$ und $R^2$ bedeuten bevorzugt Wasserstoff, ($C_1$ - $C_4$)-Alkyl, ($C_2$ - $C_6$)-Alkenyl oder Phenyl.

Bevorzugt sind als Hydrogel-formende Polymere vernetzte Polymere mit Säuregruppen, die überwiegend in Form ihrer Salze, in der Regel Alkali- oder Ammoniumsalze, vorliegen. Derartige Polymere quellen bei Kontakt mit wässrigen Flüssigkeiten besonders stark zu Gelen auf.

Bevorzugt sind Polymere, die durch vernetzende Polymerisation oder Copolymerisation von säuregruppentragenden monoethylenisch ungesättigten Monomeren oder deren Salzen erhalten werden. Ferner ist es möglich, diese Monomere ohne Vernetzer zu (co-)polymerisieren und nachträglich zu vernetzen.

Solche Säuregruppen tragenden Monomere sind beispielsweise monoethylenisch ungesättigte $C_3$- bis $C_{25}$-Carbonsäuren oder Anhydride wie Acrylsäure, Methacrylsäure, Ethacrylsäure, $\alpha$-Chloracrylsäure, Crotonsäure, Maleinsäure, Maleinsäureanhydrid, Itaconsäure, Citraconsäure, Mesaconsäure, Glutaconsäure, Aconitsäure und Fumarsäure. Weiterhin kommen monoethylenisch ungesättigte Sulfonoder Phosphonsäuren in Betracht, beispielsweise Vinylsulfonsäure, Allylsulfonsäure, Sulfoethylacrylat, Sulfomethacrylat, Sulfopropylacrylat, Sulfopropylmethacrylat, 2-Hydroxy-3-acryloxypropylsulfonsäure, 2-Hydroxy-3-methacryl-oxypropylsulfonsäure, Vinylphosphonsäure, Allylphosphonsäure, Styrolsulfonsäure und 2-Acrylamido-2-methylpropansulfonsäure. Die Monomeren können allein oder in Mischung untereinander eingesetzt werden.

Bevorzugt eingesetzte Monomere sind Acrylsäure, Methacrylsäure, Vinylsulfonsäure, Acrylamidopropansulfonsäure oder Mischungen dieser Säuren, z. B. Mischungen aus Acrylsäure und Methacrylsäure, Mischungen aus Acrylsäure und Acrylamidopropan-sulfonsäure oder Mischungen aus Acrylsäure und Vinylsulfonsäure. Ein besonders bevorzugt eingesetztes Monomeres ist Acrylsäure.

Zur Optimierung von Eigenschaften kann es sinnvoll sein, zusätzliche monoethylenisch ungesättigte Verbindungen einzusetzen, die keine Säuregruppen tragen, aber mit den säuregruppentragenden Monomeren copolymerisierbar sind. Hierzu gehören beispielsweise die Amide und Nitrile von monoethylenisch ungesättigten Carbonsäuren, z. B. Acrylamid, Methacrylamid und N-Vinylformamid, N-Vinylacetamid, N-Methyl-vinylacetamid, Acrylnitril und Methacrylnitril. Weitere geeignete Verbindungen sind beispielsweise Vinylester von gesättigten $C_1$- bis $C_4$-Carbonsäuren wie Vinylformiat, Vinylacetat oder Vinylpropionat, Alkylvinylether mit mindestens 2 C-Atomen in der Alkylgruppe, wie z. B. Ethylvinylether oder Butylvinylether, Ester von monoethylenisch ungesättigten $C_3$- bis $C_6$-Carbonsäuren, z. B. Ester aus einwertigen $C_1$- bis $C_{18}$-Alkoholen und Acrylsäure, Methacrylsäure oder Maleinsäure, Halbester von Maleinsäure, z. B. Maleinsäuremono-methylester, N-Vinyllactame wie N-Vinylpyrrolidon oder N-Vinylcaprolactam, Acrylsäure- und Methacrylsäureester von alkoxylierten einwertigen, gesättigten Alkoholen, z. B. von Alkoholen mit 10 bis 25 C-Atome, die mit 2 bis 200 Mol Ethylenoxid und/oder Propylenoxid pro Mol Alkohol umgesetzt worden sind, sowie Monoacrylsäureester und Monomethacrylsäureester von Polyethylenglykol oder Polypropylenglykol, wobei die Molmassen ($M_n$) der Polyalkylenglykole beispielsweise bis zu 2000 betragen können. Weiterhin geeignete Monomere sind Styrol und alkylsubstituierte Styrole wie Ethylstyrol oder tert.-Butylstyrol.

Diese keine säuregruppentragenden Monomere können auch in Mischung mit anderen Monomeren eingesetzt werden, z. B. Mischungen aus Vinylacetat und 2-Hydroxyethylacrylat in beliebigem Verhältnis. Diese keine Säuregruppen tragenden Monomere werden der Reaktionsmischung in Mengen zwischen 0 und 50 Gew.-%, vorzugsweise kleiner 20 Gew.-% zugesetzt.

Bevorzugt werden vernetzte Polymere aus Säuregruppen tragenden monoethylenisch ungesättigten Monomeren, die gegebenenfalls vor oder nach der Polymerisation in ihre Alkali- oder Ammoniumsalze überführt werden, und aus 0 - 40 Gew.-% bezogen auf ihr Gesamtgewicht keine säuregruppentragenden monoethylenisch ungesättigten Monomeren.

Bevorzugt werden vernetzte Polymere aus monoethylenisch ungesättigten $C_3$- bis $C_{12}$-Carbonsäuren und/oder deren Alkali- oder Ammoniumsalzen. Insbesondere werden vernetzte Polyacrylsäuren bevorzugt, deren Säuregruppen zu 5 bis 30 Mol%, vorzugsweise bei 5 bis 20 Mol%, besonders bevorzugt bei 5 bis 10 Mol%, bezogen auf die Säuregruppen enthaltenden Monomere als Alkali- oder Ammoniumsalze vorliegen.

Als Vernetzer können Verbindungen fungieren, die mindestens zwei ethylenisch ungesättigte Doppelbindungen aufweisen. Beispiele für Verbindungen dieses Typs sind N,N'-Methylenbisacrylamid, Polyethylenglykoldiacrylate

und Polyethylenglykoldimethacrylate, die sich jeweils von Polyethylenglykolen eines Molekulargewichts von 106 bis 8500, vorzugsweise 400 bis 2000, ableiten, Trimethylolpropantriacrylat, Trimethylolpropantrimethacrylat, Ethylenglykoldiacrylat, Ethylenglykoldimethacrylat, Propylenglykoldiacrylat Propylenglykoldimethacrylat, Butandioldiacrylat, Butandioldimethacrylat, Hexandioldiacrylat, Hexandioldimethacrylat, Allylmethacrylat, Diacrylate und Dimethacrylate von Blockcopolymerisaten aus Ethylenoxid und Propylenoxid, zweifach bzw. mehrfach mit Acrylsäure oder Methacrylsäure veresterte mehrwertige Alkohole, wie Glycerin oder Pentaerythrit, Triallylamin, Dialkyldiallylammoniumhalogenide wie Dimethyldiallylammoniumchlorid und Diethyldiallylammoniumchlorid, Tetraallylethylendiamin, Divinylbenzol, Diallylphthalat, Polyethylenglykoldivinylether von Polyethylenglykolen eines Molekulargewichtes von 106 bis 4000, Trimethylolpropandiallylether, Butandioldivinylether, Pentaerythrittriallylether, Umsetzungsprodukte von 1 Mol Ethylenglykoldiglycidylether oder Polyethylenglykoldiglycidylether mit 2 Mol Pentaerythritoltriallylether oder Allylalkohol, und/oder Divinylethylenharnstoff. Vorzugsweise setzt man wasserlösliche Vernetzer ein, z. B. N,N'-Methylenbisacrylamid, Polyethylenglykoldiacrylate und Polyethylenglykol-dimethacrylate, die sich von Additionsprodukten von 2 bis 400 Mol Ethylenoxid an 1 Mol eines Diols oder Polyols ableiten, Vinylether von Additionsprodukten von 2 bis 400 Mol Ethylenoxid an 1 Mol eines Diols oder Polyols, Ethylenglykoldiacrylat, Ethylenglykoldimethacrylat oder Triacrylate und Trimethacrylate von Additionsprodukten von 6 bis 20 Mol Ethylenoxid an 1 Mol Glycerin, Pentaerythrittriallylether und/oder Divinylharnstoff.

Als Vernetzer kommen außerdem Verbindungen in Betracht, die mindestens eine polymerisierbare ethylenisch ungesättigte Gruppe und mindestens eine weitere funktionelle Gruppe enthalten. Die funktionelle Gruppe dieser Vernetzer muss in der Lage sein, mit den funktionellen Gruppen, im wesentlichen den Säuregruppen, der Monomeren zu reagieren. Geeignete funktionelle Gruppen sind beispielsweise Hydroxyl-, Amino-, Epoxi- und Aziridinogruppen. Verwendung finden können z. B. Hydroxyalkylester der oben genannten monoethylenisch ungesättigten Carbonsäuren, z. B. 2-Hydroxyethylacrylat, Hydroxypropylacrylat, Hydroxybutylacrylat, Hydroxyethylmethacrylat, Hydroxypropylmethacrylat und Hydroxybutylmethacrylat, Allylpiperidiniumbromid, N-Vinylimidazole wie z. B. N-Vinylimidazol, 1-Vinyl-2-methylimidazol und N-Vinylimidazoline wie N-Vinylimidazolin, 1-Vinyl-2-methylimidazolin, 1-Vinyl-2-ethylimidazolin oder 1-Vinyl-2-propylimidazolin, die in Form der freien Basen, in quaternisierter Form oder als Salz bei der Polymerisation eingesetzt werden können. Außerdem eignen sich Dialkylaminoethylacrylat, Dimethylaminoethylmethacrylat, Diethylaminoethylacrylat und Diethylaminoethylmethacrylat. Die basischen Ester werden vorzugsweise in quaternisierter Form oder als Salz eingesetzt. Weiterhin kann z. B. auch Glycidyl(meth)acrylat eingesetzt werden.

Weiterhin kommen als Vernetzer Verbindungen in Betracht, die mindestens zwei funktionelle Gruppen enthalten, die in der Lage sind, mit den funktionellen Gruppen, im wesentlichen den Säuregruppen der Monomeren zu reagieren. Die hierfür geeigneten funktionellen Gruppen wurden bereits oben genannt, d. h. Hydroxyl-, Amino-, Epoxi-, Isocyanat-, Ester-, Amido- und Aziridinogruppen. Beispiele für solche Vernetzer sind Ethylenglykol, Diethylenglykol, Triethylenglykol, Tetraethylenglykol, Polyethylenglykol, Glycerin, Polyglycerin, Triethanolamin, Propylenglykol, Polypropylenglykol, Blockcopolymerisate aus Ethylenoxid und Propylenoxid, Ethanolamin, Sorbitanfettsäureester, ethoxylierte Sorbitanfettsäureester, Trimethylolpropan, Pentaerythrit, 1,3-Butandiol, 1,4-Butandiol, Polyvinylalkohol, Sorbit, Stärke, Polyglycidylether wie Ethylenglykoldiglycidylether, Polyethylenglykol-diglycidylether, Glycerindiglycidylether, Glycerinpolyglycidylether, Diglycerinpolyglycidylether, Polyglycerinpolyglycidylether, Sorbitpolyglycidylether, Pentaerythritpolyglycidylether, Propylenglykoldiglycidylether und Polypropylenglykoldiglycidylether, Polyaziridinverbindungen wie 2,2-Bishydroxymethylbutanoltris[3-(1-aziridinyl)-propionat], 1,6-Hexamethylendiethylenharnstoff, Diphenylmethan-bis-4,4'-N,N'-diethylenharnstoff, Halogenepoxyverbindungen wie Epichlorhydrin und $\alpha$-Methylepifluorhydrin, Polyisocyanate wie 2,4-Toluylendiisocyanat und Hexamethylendiisocyanat, Alkylencarbonate wie 1,3-Dioxolan-2-on und 4-Methyl-1,3-dioxolan-2-on, weiterhin Bisoxazoline und Oxazolidone, Polyamidoamine sowie deren Umsetzungsprodukte mit Epichlorhydrin, ferner polyquaternäre Amine wie Kondensationsprodukte von Dimethylamin mit Epichlorhydrin, Homo- und Copolymere von Diallyldimethylammoniumchlorid sowie Homo- und Copolymerisate von Dimethylaminoethyl(meth)acrylat, die gegebenenfalls mit beispielsweise Methylchlorid quaterniert sind.

Weitere geeignete Vernetzer sind polyvalente Metallionen, die in der Lage sind, ionische Vernetzungen auszubilden. Beispiele für solche Vernetzer sind Magnesium-, Calcium-, Barium- und Aluminiumionen. Diese Vernetzer werden beispielsweise als Hydroxide, Carbonate oder Hydrogencarbonate eingesetzt. Weitere geeignete Vernetzer sind multifunktionelle Basen, die ebenfalls in der Lage sind, ionische Vernetzungen auszubilden, beispielsweise Polyamine oder deren quaternierte Salze. Beispiele für Polyamine sind Ethylendiamin, Diethylentriamin, Triethylentetramin, Tetraethylenpentamin, Pentaethylenhexamin und Polyethylenimine sowie Polyamine mit Molmassen von jeweils bis zu 4000000.

Die Vernetzer sind in der Reaktionsmischung beispielsweise von 0,001 bis 20 und vorzugsweise von 0,01 bis 14 Gew.-% vorhanden.

Die Polymerisation wird wie allgemein üblich durch einen Initiator ausgelöst. Auch eine Initiierung der Polymerisation durch Einwirkung von Elektronenstrahlen auf die polymerisierbare, wässrige Mischung ist möglich. Die Polymerisation kann allerdings auch in Abwesenheit von Initiatoren der obengenannten Art durch Einwirkung energiereicher Strahlung in Gegenwart von Photoinitiatoren ausgelöst werden. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxide, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natriumoder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl)peroxidicarbonat, Dicyclohexylperoxidicarbonat, Di-(4-tert.-butylcyclohexyl)peroxidicarbonat, Dimyristilperoxidicarbonat, Diacetylperoxi-dicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat. Besonders geeignete Polymerisationsinitiatoren sind wasserlösliche Azostarter, z. B. 2,2'-Azo-bis-(2-amidinopropan) dihydrochlorid, 2,2'-Azobis-(N,N'-dimethylen)isobutyramidin-dihydrochlorid, 2-(Carbamoylazo)isobutyronitril, 2,2'-Azobis[2-(2'-imidazolin-2-yl)propan]dihydrochlorid und 4,4'-Azobis-(4-cyanovaleriansäure). Die genannten Polymerisationsinitiatoren werden in üblichen Mengen eingesetzt, z. B. in Mengen von 0,01 bis 5, vorzugsweise 0,05 bis 2,0 Gew.-%, bezogen auf die zu polymerisierenden Monomeren.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyro-sulfit oder -sulfid, Metallsalze, wie Eisen(II)-ionen oder Natriumhydroxymethylsulfoxylat. Vorzugsweise verwendet man als reduzierende Komponente des Redoxkatalysators Ascorbinsäure oder Natriumsulfit. Bezogen auf die bei der Polymerisation eingesetzte Menge an Monomeren verwendet man beispielsweise $3 \times 10^{-6}$ bis 1 Mol-% der reduzierenden Komponente des Redoxkatalysatorsystems und 0,001 bis 5,0 Mol-% der oxidierenden Komponente des Redoxkatalysators.

Wenn man die Polymerisation durch Einwirkung energiereicher Strahlung auslöst, verwendet man üblicherweise als Initiator sogenannte Photoinitiatoren. Hierbei kann es sich beispielsweise um sogenannte $\alpha$-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethyl-amino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azido-benzyliden)-4-methylcyclohexanon. Die Photoinitiatoren werden, falls sie eingesetzt werden, üblicherweise in Mengen von 0,01 bis 5 Gew.-% bezogen auf die zu polymerisierenden Monomeren angewendet.

Die vernetzten Polymere werden vorzugsweise teilneutralisiert eingesetzt. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere. Als Neutralisationsmittel kommen in Frage: Alkalimetallbasen oder Ammoniak bzw. Amine. Vorzugsweise wird Natronlauge, Kalilauge oder Lithiumhydroxid verwendet. Die Neutralisation kann jedoch auch mit Hilfe von Natriumcarbonat, Natriumhydrogencarbonat, Kaliumcarbonat oder Kaliumhydrogencarbonat oder anderen Carbonaten oder Hydrogencarbonaten oder Ammoniak vorgenommen werden. Darüberhinaus sind prim., sek. und tert. Amine einsetzbar.

Alternativ kann die Einstellung des Neutralisationsgrades vor, während oder nach der Polymerisation in allen dafür geeigneten Apparaturen vorgenommen werden. Die Neutralisation kann beispielsweise bei Verwendung eines Kneters zur Polymerisation auch direkt hierin vorgenommen werden.

Als technische Verfahren zur Herstellung dieser Produkte können alle Verfahren Anwendung finden, die üblicherweise bei der Herstellung von Superabsorbern eingesetzt werden, wie sie z. B. im Kapitel 3 in "Modern Superabsorbent Polymer Technology", F.L. Buchholz and A.T. Graham, Wiley-VCH, 1998, erläutert sind.

Bevorzugt ist die Polymerisation in wässriger Lösung als sogenannte Gelpolymerisation. Dabei werden 10 bis 70 Gew.-%ige wässrige Lösungen der Monomere und gegebenenfalls einer geeigneten Pfropfgrundlage in Gegenwart eines Radikalinitiators unter Ausnutzung des Trommsdorff-Norrish-Effektes polymerisiert.

Die Polymerisationsreaktion kann im Temperaturbereich zwischen 0 °C und 150 °C, vorzugsweise zwischen 10 °C und 100 °C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.

Durch mehrstündiges Nachheizen der Polymerisatgele im Temperaturbereich 50 bis 130 °C, vorzugsweise 70 bis 100 °C, können die Qualitätseigenschaften der Polymerisate noch verbessert werden.

Bevorzugt werden Hydrogel-formende Polymere, die oberflächennachvernetzt sind. Die Oberflächennachvernetzung kann in an sich bekannter Weise mit getrockneten, gemahlenen und abgesiebten Polymerpartikeln geschehen.

Hierzu werden Verbindungen, die mit den funktionellen Gruppen der Polymere unter Vernetzung reagieren können, vorzugsweise in Form einer wasserhaltigen Lösung auf die Oberfläche der Hydrogel-Partikel aufgebracht. Die wasserhaltige Lösung kann wassermischbare organische Lösungsmittel enthalten. Geeignete Lösungsmittel sind Alkohole wie Methanol, Ethanol, i-Propanol, Ethylenglycol, Propylenglycol oder Aceton.

Bei der nachträglichen Vernetzung werden Polymere, die durch die Polymerisation der oben genannten monoethylenisch ungesättigten Säuren und gegebenenfalls monoethylenisch ungesättigten Comonomere hergestellt wurden und die ein Molekulargewicht größer 5000, bevorzugt größer 50000 aufweisen, mit Verbindungen umgesetzt, die mindestens zwei gegenüber Säuregruppen reaktive Gruppen aufweisen. Diese Umsetzung kann bei Raumtemperatur oder aber bei erhöhten Temperaturen bis zu 220 °C erfolgen.

Geeignete Nachvernetzungsmittel sind beispielsweise

- Di- oder Polyglycidylverbindungen wie Phosphonsäurediglycidylether oder Ethylenglykoldiglycidylether, Bischlorhydrinether von Polyalkylenglykolen,
- Alkoxysilylverbindungen,
- Polyaziridine, Aziridin-Einheiten enthaltende Verbindungen auf Basis von Polyethern oder substituierten Kohlenwasserstoffen, beispielsweise Bis-N-aziridinomethan,
- Polyamine oder Polyamidoamine sowie deren Umsetzungsprodukte mit Epichlorhydrin,
- Polyole wie Ethylenglykol, 1,2-Propandiol, 1,4-Butandiol, Glycerin, Methyltriglykol, Polyethylenglykole mit einem mittleren Molekulargewicht $M_w$ von 200 - 10000, Di- und Polyglycerin, Pentaerythrit, Sorbit, die Oxethylate dieser Polyole sowie deren Ester mit Carbonsäuren oder der Kohlensäure wie Ethylencarbonat oder Propylencarbonat,
- Kohlensäurederivate wie Harnstoff, Thioharnstoff, Guanidin, Dicyandiamid, 2-Oxazolidinon und dessen Derivate, Bisoxazolin, Polyoxazoline, Di- und Polyisocyanate,
- Di- und Poly-N-methylolverbindungen wie beispielsweise Methylenbis (N-methylol-methacrylamid) oder Melamin-Formaldehyd-Harze,
- Verbindungen mit zwei oder mehr blockierten Isocyanat-Gruppen wie beispielsweise Trimethylhexamethylendiisocyanat blockiert mit 2,2,3,6-Tetramethyl-piperidinon-4.

Bei Bedarf können saure Katalysatoren wie beispielsweise p-Toluolsulfonsäure, Phosphorsäure, Borsäure oder Ammoniumdihydrogenphosphat zugesetzt werden.

Besonders geeignete Nachvernetzungsmittel sind Di- oder Polyglycidylverbindungen wie Ethylenglykoldiglycidylether, die Umsetzungsprodukte von Polyamidoaminen mit Epichlorhydrin und 2-Oxazolidinon.

Das Aufbringen der Vernetzer-Lösung erfolgt bevorzugt durch Aufsprühen einer Lösung des Vernetzers in herkömmlichen Reaktionsmischern oder Misch- und Trocknungsanlagen wie beispielsweise Patterson-Kelly-Mischer, DRAIS-Turbulenzmischer, Lödige-Mischer, Schneckenmischer, Tellermischer, Wirbelschichtmischer und Schugi-Mix. Nach Aufsprühen der Vernetzer-Lösung kann ein Temperaturbehandlungsschritt nachfolgen, bevorzugt in einem nachgeschalteten Trockner, bei einer Temperatur zwischen 80 und 230 °C, bevorzugt 80 - 190 °C, und besonders bevorzugt zwischen 100 und 160 °C, über einen Zeitraum von 5 Minuten bis 6 Stunden, bevorzugt 10 Minuten bis 2 Stunden und besonders bevorzugt 10 Minuten bis 1 Stunde, wobei sowohl Spaltprodukte als auch Lösungsmittelanteile entfernt werden können. Die Trocknung kann aber auch im Mischer selbst erfolgen, durch Beheizung des Mantels oder Einblasen eines vorgewärmten Trägergases.

Vorzugsweise wird zusätzlich die Hydrophilie der Partikeloberfläche der hydrogel-formenden Polymere durch Ausbildung von Komplexen modifiziert. Die Bildung der Komplexe auf der äußeren Schale der Hydrogel-Partikel erfolgt durch Aufsprühen von Lösungen zweioder mehrwertiger Metallsalz-Lösungen, wobei die Metall-Kationen mit den Säuregruppen des Polymers unter Ausbildung von Komplexen reagieren können. Beispiele für zwei- oder mehrwertige Metall-Kationen sind $Mg^{2+}$, $Ca^{2+}$, $Al^{3+}$, $Sc^{3+}$, $Ti^{4+}$, $Mn^{2+}$, $Fe^{2+/3+}$, $Co^{2+}$, $Ni^{2+}$, $Cu^{+/2+}$, $Zn^{2+}$, $Y^{3+}$, $Zr^{4+}$, $Ag^{+}$, $La^{3+}$, $Ce^{4+}$, $Hf^{4+}$, und $Au^{+/3+}$, bevorzugte Metall-Kationen sind $Mg^{2+}$, $Ca^{2+}$, $Al^{3+}$, $Ti^{4+}$, $Zr^{4+}$ und $La^{3+}$, und besonders bevorzugte Metall-Kationen sind $Al^{3+}$, $Ti^{4+}$ und $Zr^{4+}$. Die Metall-Kationen können sowohl allein als auch im Gemisch untereinander eingesetzt werden. Von den genannten Metall-Kationen sind alle Metallsalze geeignet, die eine ausreichende Löslichkeit in dem zu verwendenden Lösungsmittel besitzen. Besonders geeignet sind Metallsalze mit schwach komplexierenden Anionen wie zum Beispiel Chlorid, Nitrat und Sulfat. Als Lösungsmittel für die Metallsalze können Wasser, Alkohole, DMF, DMSO sowie Mischungen dieser Komponenten eingesetzt werden. Besonders bevorzugt sind Wasser und Wasser/Alkohol-Mischungen wie zum Bespiel Wasser/Methanol oder Wasser/1,2-Propandiol.

Das Aufsprühen der Metallsalz-Lösung auf die Partikel des Hydrogel-formenden Polymers kann sowohl vor als auch nach der Oberflächennachvernetzung der Partikel erfolgen. In einem besonders bevorzugten Verfahren erfolgt die Aufsprühung der Metallsalz-Lösung im gleichen Schritt mit dem Aufsprühen der Vernetzer-Lösung, wobei beide Lösungen getrennt nacheinander oder gleichzeitig über zwei Düsen aufgesprüht werden, oder Vernetzer- und Metallsalz-Lösung vereint über eine Düse aufgesprüht werden können.

Optional kann noch eine weitere Modifizierung der Hydrogel-formenden Polymere durch Zumischung feinteiliger anorganischer Feststoffe, wie zum Beispiel Silica, Aluminiumoxid, Titandioxid und Eisen(II)-oxid erfolgen, wodurch die Effekte der Oberflächennachbehandlung noch weiter verstärkt werden. Besonders bevorzugt ist die Zumischung von hydrophilem Silica oder von Aluminiumoxid mit einer mittleren Größe der Primärteilchen von 4 bis 50 nm und einer spezifischen Oberfläche von 50 - 450 $m^2/g$. Die Zumischung feinteiliger anorganischer Feststoffe erfolgt bevorzugt nach der Oberflächenmodifizierung durch Vernetzung/Komplexbildung, kann aber auch vor oder während diesen Oberflächenmodifizierungen durchgeführt werden.

Als für die erfindungsgemäßen Mischungen geeignete feste, feinteilige, hydrogel-formende Polymere haben sich vorzugsweise solche Polymere erwiesen, welche u.a. durch eine Absorbency Under Load (AUL) von mehr als 5 g/g, insbesondere von mehr als 7 g/g und weniger als 100 g/g, insbesondere weniger als 80 g/g und eine Centrifuge Retention Capacity (CRC) von mehr als 10 g/g, insbesondere von mehr als 12 g/g und weniger als 100 g/g, insbesondere weniger als 80 g/g gekennzeichnet sind. Die genaue Durchführung dieser Testmethoden, also die Ermittlung der jeweiligen Werte der AUL und CRC ist im experimentellen Teil beschrieben.

Weiterhin enthalten die erfindungsgemäßen Mischungen hydraulische Bindemittel, wie zum Beispiel Kalk, Zement, Gips, sowie weitere dem Fachmann bekannte Zuschlagsstoffe wie Sand, Quarzmehl oder Kreide. Ferner können den erfindungsgemäßen Mischungen weitere in der Bauchemie hinlänglich bekannte Zusätze wie z.B. Celluloseether, Stellmittel, Hydratationsbeschleuniger und Hydratationsverzögerer, Polymerdispersionen oder Dispersionspulver zugesetzt werden. Besonders gute Ergebnisse werden dabei mit solchen Mischungen erzielt, welche als hydraulisch abbindende Baustoffe Zement oder Gips aufweisen.

Nach dem ebenfalls erfindungsgemäßen Verfahren zur Herstellung der Mischungen sind diese vorteilhaft in der Weise erhältlich, daß die festen, feinteiligen, hydrogel-formenden Polymere mit den hydraulisch abbindenden Baustoffen vermengt werden, wobei das Verfahren dadurch gekennzeichnet ist, daß die festen, feinteiligen, hydrogelformenden Polymere dem pulverförmigen Baustoff vor dem Anmachen mit Wasser zugesetzt werden. Dies kann in üblichen Mischapparaturen der Bauindustrie erfolgen, beispielsweise in Schaufelmischern oder aber in anderen bekannten Zwangsmischaggregaten.

Ebenfalls erfindungsgemäß ist die Verwendung von festen, feinteiligen, hydrogel-formenden Polymeren, welche einen Anteil von Partikeln mit einer Teilchengröße von mehr als 200 µm aufweisen, der nicht mehr als 2 Gew.-% beträgt, als Zuschlagsstoffe für hydraulisch abbindende Baustoffe, vorzugsweise auf der Basis von Zement, Kalk oder Gips.

Die erfindungsgemäßen Mischungen zeichnen sich u.a. dadurch aus, dass sie für einen längeren Zeitraum Wasser speichern können und dadurch sowohl eine höhere Frühfestigkeit als auch eine höhere Endfestigkeit nach 28 Tagen Normklima aufweisen. Sie sind nach einem leicht durchführbaren und wirtschaftlich günstigen Verfahren zugänglich.

## Experimenteller Teil

### I. Testmethoden

#### a) Zentrifugenretentionskapazität (CRC Centrifuge Retention Capacity)

Bei dieser Methode wird die freie Quellbarkeit des Hydrogels im Teebeutel bestimmt. Zur Bestimmung der CRC werden 0.2000 ± 0.0050 g getrocknetes Hydrogel (Kornfraktion 106 - 850 µm) in einem 60 x 85 mm großen Teebeutel eingewogen, der anschließend verschweißt wird. Der Teebeutel wird für 30 Minuten in einen Überschuss von 0.9 gew.%igen Kochsalzlösung gegeben (mindestens 0,83 1 KochsalzLösung / 1 g Polymerpulver). Anschließend wird der Teebeutel 3 Minuten lang bei 250 g zentrifugiert. Die Bestimmung der Flüssigkeitsmenge geschieht durch Auswägen des zentrifugierten Teebeutels.

#### b) Absorption unter Druck (AUL Absorbency Under Load) (0.7 psi)

Die Messzelle zur Bestimmung der AUL stellt ein Plexiglas-Zylinder mit einem Innendurchmesser von 60 mm und einer Höhe von 50 mm dar, der an der Unterseite einen angeklebten Edelstahl-Siebboden mit einer Maschenweite von 36 µm besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 1345 g. Zur Durchführung der Bestimmung der AUL wird das Gewicht des leeren Plexiglas-Zylinders und der Plastikplatte ermittelt und als $W_0$ notiert. Dann werden 0,900 ± 0.005 g Hydrogelformendes Polymer in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit

gewogen; das Gewicht wird als $W_a$ notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm und einer Porosität 0 gelegt und soviel 0.9 Gew.%ige Natriumchloridlösung eingefüllt, dass die Flüssigkeitsoberfläche mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 µm (S&S 589 Schwarzband von Schleicher & Schüll) auf die keramische Platte gelegt. Der Hydrogel-formendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als $W_b$ notiert.

Die Absorption unter Druck (AUL) wird wie folgt berechnet:

$$\text{AUL [g/g]} = [W_b\text{-}W_a] / [W_a\text{-}W_0]$$

II. Durchgeführte Experimente

Als erfindungsgemäße superabsorbierende Polymere (SAP) wurden eingesetzt:

- SAP 1 (Hysorb C 3746-1 der BASF Aktiengesellschaft) mit einer CRC in 0,9 % Natriumchloridlösung von 15 g/g, einer AUL (0,5 psi) von 8 g/g und
  einem Anteil von Partikeln mit einer Teilchengröße > 200 µm von weniger als 1,5 Gew.-%

- SAP 2 (Hysorb C 3746-5 der BASF Aktiengesellschaft) mit einer CRC in 0,9 % Natriumchloridlösung von 25 g/g, einer AUL (0,5 psi) von 18 g/g und
  mit einem Anteil von Partikeln mit einer Teilchengröße > 200 µm von weniger als 1 Gew.-%

Als vergleichende, nicht erfindungsgemäße superabsorbierende Polymere (SAP) wurden eingesetzt:

- SAP 3* (Hysorb C 7015 der BASF Aktiengesellschaft) mit einer CRC in 0,9 % Natriumchloridlösung von 36 g/g, einer AUL (0,5 psi) von 25 g/g und
  mit einem Anteil von Partikeln mit einer Teilchengröße > 200 µm von deutlich mehr als 2 Gew.-%

Prüfung der Wasserretention im Normmörtel

Ein gemäß EN 196/Teil 1 hergestellter Normmörtel wurde vor dem Anmachen mit Wasser in fünf Portionen geteilt. Je eine Portion wurde mit 0,5 Gew.-% der beiden erfindungsgemäßen SAP 1 und 2 bzw. der Vergleichs-SAP 3* sorgfältig vermischt. Die beiden anderen Proben blieben unmodifiziert. Anschließend wurden alle 5 Mischungen mit den in der nachfolgenden Tabelle angegeben Wassermengen angemacht. Nach DIN 1164 wurde die Druck- und Biegezugfestigkeit der Mörtel zu verschiedenen Zeiten und unter verschiedenen Lagerbedingungen bestimmt.

Die das Vergleichs-SAP enthaltende Mischung besaß nach dem Erhärten keine gleichmäßige Struktur. Die großen SAP-Partikel waren mit bloßem Auge als Störstellen erkennbar. Die Druck- und Biegezugfestigkeiten konnten daher nicht bestimmt werden.

Tabelle 1:

| Druck- und Biegezugfestigkeiten der Beispiele V1, 2, V3 und 4 | | | | | | | | | | |
|---|---|---|---|---|---|---|---|---|---|---|
| Bsp. | Zusatz | W/Z | Druckfestigkeit | | | | Biegezugfestigkeit | | | |
| | | | 1d trocken | 7d trocken | 28d trocken | 28d nass | 1d trocken | 7d trocken | 28d trocken | 28d nass |
| V1 | ohne | 0,5 | 17 | 29 | 30 | 46 | 3,9 | 5,2 | 6,3 | 8,1 |
| 2 | 0,5 % SAP 1 | 0,5 | 20 | 35 | 38 | 48 | 4,4 | 6,0 | 8,4 | 8,0 |
| V3 | ohne | 0,58 | 13 | 23 | 22 | 38 | 3,3 | 4,7 | 5,0 | 7,7 |

Tabelle 1: (fortgesetzt)

| Druck- und Biegezugfestigkeiten der Beispiele V1, 2, V3 und 4 | | | | | | | | | | |
|---|---|---|---|---|---|---|---|---|---|---|
| Bsp. | Zusatz | W/Z | Druckfestigkeit | | | | Biegezugfestigkeit | | | |
| | | | 1d trocken | 7d trocken | 28d trocken | 28d nass | 1d trocken | 7d trocken | 28d trocken | 28d nass |
| 4 | 0,5 % SAP 2 | 0,58 | 15 | 26 | 28 | 38 | 4,0 | 4,9 | 6,5 | 7,6 |
| V5 | 0,5 % V-SAP 3* | 0,58 | | nicht bestimmbar | | | | | | |

Die Versuche zeigen, dass durch den Zusatz der erfindungsgemäßen SAP 1 und 2 im Vergleich zum jeweiligen 0-Wert die Druck- und Biegezugfestigkeiten der Normmörtel bereits nach 1 Tag (d) Trokkenlagerung besonders aber nach 28 d Trockenlagerung deutlich angehoben werden kann. Dieser Effekt ist eindeutig auf die wasserspeichernde Wirkung der SAP zurückzuführen, da die entsprechenden Endfestigkeiten nach Nasslagerung mit und ohne Modifizierung nahezu identisch sind.

**Patentansprüche**

1. Mischungen aus festen, feinteiligen, hydrogel-formenden Polymeren sowie hydraulisch abbindenden Baustoffen, wobei solche festen, feinteiligen, hydrogel-formenden Polymere eingesetzt werden, welche einen Anteil von Partikeln mit einer Teilchengröße von mehr als 200 µm aufweisen, der nicht mehr als 2 Gew.-% beträgt.

2. Mischungen nach Anspruch 1, wobei die hydrogel-formenden Polymere in einer solchen Menge eingesetzt werden, daß ihr Anteil, bezogen auf den hydraulisch abbindenden Baustoff, 0,01 bis 5 Gew.-% beträgt.

3. Mischungen nach einem der Ansprüche 1 oder 2, wobei solche festen, feinteiligen, hydrogel-formenden Polymere verwendet werden, welche als vernetzte Polymere mit Säuregruppen vorliegen.

4. Mischungen nach Anspruch 3, wobei solche festen, feinteiligen, hydrogel-formenden Polymere verwendet werden, welche monoethylenisch ungesättigte $C_3$- bis $C_{25}$-Carbonsäuren oder Anhydride als Monomere enthalten.

5. Mischungen nach Anspruch 4, wobei solche festen, feinteiligen, hydrogel-formenden Polymere verwendet werden, welche Acrylsäure als Monomere enthalten.

6. Verfahren zur Herstellung von Mischungen gemäß den Ansprüchen 1 bis 5, wobei die festen, feinteiligen, hydrogel-formenden Polymere mit den hydraulisch abbindenden Baustoffen vermengt werden, **dadurch gekennzeichnet, daß** die festen, feinteiligen, hydrogel-formenden Polymere dem pulverförmigen Baustoff vor dem Anmachen mit Wasser zugesetzt werden.

7. Verwendung von festen, feinteiligen, hydrogel-formenden Polymeren, welche einen Anteil von Partikeln mit einer Teilchengröße von mehr als 200 µm aufweisen, der nicht mehr als 2 Gew.-% beträgt, als Zuschlagsstoffe für hydraulisch abbindende Baustoffe.

8. Verwendung nach Anspruch 7, wobei als hydraulisch abbindender Baustoff Zement eingesetzt wird.

9. Verwendung nach Anspruch 7, wobei als hydraulisch abbindender Baustoff Gips eingesetzt wird.

Europäisches Patentamt

# EUROPÄISCHER RECHERCHENBERICHT

Nummer der Anmeldung
EP 02 02 8229

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | DATABASE WPI<br>Section Ch, Week 198808<br>Derwent Publications Ltd., London, GB;<br>Class A14, AN 1988-054338<br>XP002234342<br>& JP 63 011558 A (SEKISUI HOUSE KK),<br>19. Januar 1987 (1987-01-19)<br>* Zusammenfassung *<br>--- | 1-9 | C04B24/26<br>C04B28/02 |
| A,D | DE 195 39 250 A (SANDOZ AG)<br>2. Mai 1996 (1996-05-02)<br>* das ganze Dokument *<br>----- | 1-9 | |

RECHERCHIERTE SACHGEBIETE (Int.Cl.7)
C04B

Der vorliegende Recherchenbericht wurde für alle Patentansprüche erstellt

| Recherchenort | Abschlußdatum der Recherche | Prüfer |
|---|---|---|
| MÜNCHEN | 20. März 2003 | Pollio, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 02 02 8229

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2003

| Im Recherchenbericht angeführtes Patentdokument | | Datum der Veröffentlichung | Mitglied(er) der Patentfamilie | | | Datum der Veröffentlichung |
|---|---|---|---|---|---|---|
| JP 63011558 | A | 19-01-1988 | KEINE | | | |
| DE 19539250 | A | 02-05-1996 | CH | 690303 | A5 | 14-07-2000 |
| | | | DE | 19539250 | A1 | 02-05-1996 |
| | | | FR | 2726264 | A1 | 03-05-1996 |
| | | | GB | 2294687 | A ,B | 08-05-1996 |
| | | | IT | 1279226 | B1 | 09-12-1997 |
| | | | JP | 8208297 | A | 13-08-1996 |
| | | | US | 5925699 | A | 20-07-1999 |

EPO FORM P0461

Für nähere Einzelheiten zu diesem Anhang : siehe Amtsblatt des Europäischen Patentamts, Nr.12/82